# EUROPÄISCHE PATENTSCHRIFT

(11) **EP 1 012 955 B1**
(45) Veröffentlichungstag und Bekanntmachung des Hinweises auf die Patenterteilung: **19.12.2001**
(21) Anmeldenummer: 98952520.9
(22) Anmeldetag: 27.08.1998
(51) Int. Cl.: H02M 5/458

(54) **VORLADESCHALTUNG FÜR EINEN AM AUSGANG EINES NETZGEFÜHRTEN STROMRICHTERS ANGESCHLOSSENEN KONDENSATOR**
PRECHARGING CIRCUIT FOR A CAPACITOR CONNECTED TO THE OUTPUT OF A LINE-COMMUTATED POWER CONVERTER
CIRCUIT DE PRECHARGE POUR UN CONDENSATEUR RACCORDE A LA SORTIE D'UN CONVERTISSEUR COMMUTE PAR LE RESEAU

(30) Priorität: 09.09.1997 DE 19739553
(43) Veröffentlichungstag der Anmeldung: 28.06.2000
(73) Patentinhaber: SIEMENS AKTIENGESELLSCHAFT, 80333 München (DE)
(72) Erfinder: BAUDELOT, Eric, D-91085 Weisendorf (DE); BRUCKMANN, Manfred, D-90475 Nürnberg (DE); MITLEHNER, Heinz, D-91080 Uttenreuth (DE); WEIS, Benno, D-91085 Weisendorf (DE)
(86) Internationale Anmeldenummer: DE9802531
(87) Internationale Veröffentlichungsnummer: WO9913560

(56) Entgegenhaltungen:
- DE-A- 19 530 494
- DE-C- 19 617 048
- DE-U- 9 216 662
- US-A- 4 053 915
- US-A- 4 437 050
- US-A- 4 573 113
- US-A- 5 315 497
- US-A- 5 627 738
- PATENT ABSTRACTS OF JAPAN vol. 97, no. 5, 30. Mai 1997 & JP 09 019003 A (HONDA MOTOR CO LTD)
- PATENT ABSTRACTS OF JAPAN vol. 13, no. 75 (P-831), 21. Februar 1989 & JP 63 261408 A (SEIKO INSTR. & ELECTRONICS LTD)
- PATENT ABSTRACTS OF JAPAN vol. 16, no. 31 (E-1159), 27. Januar 1992 & JP 03 243170 A (MITSUBISHI ELECTRIC CORP.), 30. Oktober 1991
- PATENT ABSTRACTS OF JAPAN vol. 96, no. 3, 29. März 1996 & JP 07 308020 A (HITACHI), 21. November 1995
- PATENT ABSTRACTS OF JAPAN vol. 7, no. 276 (E-215), 9. Dezember 1983 & JP 58 154372 A (MEIDENSHA KK)
- PATENT ABSTRACTS OF JAPAN vol. 95, no. 7, 31. August 1995 & JP 07 099325 A (FUJI ELECTRIC CL LTD), 11. April 1995

## Beschreibung

Die Erfindung betrifft eine Schaltungsanordnung zum Vorladen des ausgangsseitig an einen netzgeführten Stromrichter angekoppelten Kondensators.

Insbesondere bei der Anschaltung von ungesteuerten Gleichrichterschaltungen mit ausgangsseitiger, kapazitiver Glättung an das Netz können sich hohe Ladeströme ergeben, da eine Phasenanschnittsteuerung nicht möglich ist. Infolge einer üblicherweise relativ niedrigen Bedämpfung des betreffenden Strompfades kann außerdem durch den hohen Ladestrom ein aus dem Kondensator und den Leitungsinduktivitäten gebildeter Schwingkreis angestoßen werden, was zu kurzzeitigen, hohen Überspannungen führt, die sich schädlich auf die verschiedensten Teile der Schaltungsanordnung auswirken können.

Um diese negativen Effekte zu vermeiden, ist es bekannt, für die Vorladephase des Glättungskondensators einen ohmschen Widerstand in dessen Strompfad einzuschalten, der zur Begrenzung des Ladestroms auf einen von der anliegenden Netzspannung abhängigen Wert führt. Nach Ablauf einer vorgegebenen Zeitspanne oder bei Überschreiten einer vorgegebenen Spannungsschwelle an dem Glättungskondensator kann sodann der ohmsche Ladewiderstand durch einen Schütz kurzgeschlossen werden. Infolge der Trägheit eines mechanischen Schützes kann eine derartige Einschaltstrombegrenzung jedoch erst nach Ablauf einer Abfallzeit des Schützes wieder wirksam werden, was sich bspw. bei dem Ausfall einer Netzhalbwelle in erhöhten Ladeströmen bemerkbar macht.

Hier bringt auch die Verwendung eines Heißleiters keine nachhaltige Verbesserung, da auch diesem, bedingt durch die thermische Zeitkonstante, eine gewisse Trägheit zu eigen ist, die es ihm nicht erlaubt, auf den Ausfall einer Netzhalbwelle zu reagieren.

Deshalb ist in dem DE-GM 92 16 662 eine Vorladeschaltung für den ausgangsseitigen Kondensator eines Stromrichters offenbart worden, wobei durch ein parallel zu dem Stromrichter zwischen das Netz und einen Anschluß des Glättungskondensators angeschlossenes Diodennetzwerk über einen ohmschen Widerstand eine Vorladung des Kondensators erfolgen kann. Sobald der Kondensator aufgeladen ist, kann über den eigentlichen Stromrichter der normale Betrieb aufgenommen werden. Hierbei ist jedoch der Kondensator über das Diodennetzwerk ständig mit dem Netz verbunden, so daß es nicht möglich ist, die Zwischenkreisspannung bspw. mit gesteuerten Ventilen auf eine geringere Spannung herabzuregeln. Andererseits macht diese Schaltung nur in Verbindung mit gesteuerten Gleichrichtern Sinn, da anderenfalls beim Einschalten sofort der ohne ohmschen Widerstand angeschaltete Gleichrichter die Stromführung übernimmt und die unerwünschten, hohen Ladeströme verursacht.

Aus diesen Nachteilen des vorbekannten Stands der Technik resultiert das die Erfindung initierende Problem, eine Schaltungsanordnung zum Vorladen des ausgangsseitig an einem netzgeführten Stromrichter angekopppelten Kondensators zu schaffen, die das Auftreten von Strom- und/oder Spannungspitzen beim Aufladen des Kondensators zuverlässig und insbesondere auch bei kurzzeitigem Ausfall der Netzspannung vermeidet; in Verbindung mit gesteuerten Gleichrichtern soll außerdem die Verstellbarkeit der Zwischenkreisspannung nicht beeinträchtigt werden, und schließlich sollen nach einem Aufladevorgang durch die zu schaffende Schaltungsanordnung möglichst keine weiteren Verluste verursacht werden.

Zur Lösung dieses Problems sieht die Erfindung vor, anstelle der bisher vorgeschalteten, ohmschen Strombegrenzungswiderstände mit weitgehend linearer Strom-Spannungs-Kennlinie zwischen einem Gleichspannungsausgang des Stromrichters und dem betreffenden Anschluß des Kondensators ein Element mit einer nicht linearen Strom-Spannungs-Kennlinie einzuschalten, welches den Ladestrom des Kondensators auf einen von der Ladespannung weitgehend unabhängigen Wert begrenzt. Die Nichtlinearität kann dabei derart gewählt werden, daß dieses Element erst oberhalb eines vorgegebenen Stromwertes einen Teil der Netzspannung aufnimmt und sich somit bei niedrigeren Strömen nicht bemerkbar macht und somit im Dauerbetrieb kaum Verluste verursacht. Da das Element unterhalb des zu begrenzenden Stromwertes nicht in Aktion tritt, ist auch eine Verstellung der Zwischenkreisspannung ohne weiteres möglich. Schließlich wird die bei Schütz- oder Heißleiterschaltungen funktionsnotwendige Schaltungsdynamik vollständig durch die Nichtlinearität der Kennlinie ersetzt, so daß kürzeste Ansprechzeiten realisiert werden können.

Das Strombegrenzungselement sollte derart dimensioniert werden, daß der Schwellwert, bei welchem eine Strombegrenzung einsetzt, oberhalb des typischen Ladestroms liegt. Hierdurch kann nach Überschreiten des betreffenden Grenzwertes auf schnellstem Weg eine effektive Bedämpfung des Ladestromkreises erreicht werden, so daß kaum Schwingungen und insbesondere keine gefährlichen Spannungspitzen auftreten können.

Für eine hohe Dynamik der erfindungsgemäßen Strombegrenzung ist eine Ansprechzeit des Strombegrenzungselements von weniger als 1 ms förderlich. Solchenfalls kann die Ausbildung jeglicher Stromspitzen bereits im Ansatz wirkungsvoll unterdrückt werden, ein Spannungsschwingen tritt kaum auf.

Zur Vereinfachung der Schaltung hat es sich als günstig erwiesen, daß das Strombegrenzungselement als passives Bauteil ausgeführt ist. Hierdurch wird außerdem die Zuverlässigkeit der Schaltung erhöht, da die Wirksamkeit der Strombegrenzung nicht von dem Vorhandensein einer zusätzlichen Versorgungsspannung abhängig ist.

Die Erfindung bevorzugt die Verwendung eines Halbleiterbauelements, um die nicht lineare Strom-Spannungs-Kennlinie des Strombegrenzers zu realisieren. Als Halbleitermaterial wird SiC empfohlen, da dieser Werkstoff eine hohe Temperaturbeständigkeit aufweist und somit im Fall einer Strombegrenzung auch einen überschüssigen Energiebetrag aufnehmen kann, und außerdem aufgrund seiner hohen Wärmeleitfähigkeit den betreffenden Energiebetrag in kürzester Zeit an die Umgebung wieder abgeben kann. Diese vorteilhaften Eigenschaften gehen einher mit einer hohen Durchbruchfestigkeit, so daß auch hohe Spannungsspitzen ohne Schwierigkeiten aufgefangen werden können.

Der erfindungsgemäße Halbleiterstrombegrenzer kann intern nach dem Prinzip einer zweipoligen Feldeffekt-Konstantstromquelle aufgebaut sein mit einem ersten, halbleitenden Bereich zwischen den beiden äußeren Anschlußklemmen, der den Ladestrompfad des Kondensators führt und durch halbleitende Bereiche mit entgegengesetzter Dotierung bereichsweise kanalartig verjüngt ist. Mit zunehmendem Ladestrom steigt der Spannungsabfall innerhalb des Halbleiterlements an, wodurch die p-n-Übergänge in Sperrichtung vorgespannt werden und sich dadurch querschnittsmäßig verbreitern, so daß der Strompfad im Bereich des Kanals verengt oder gar abgeschnürt wird und durch die hieraus resultierende Erhöhung des Widerstandes der Strom auf einen vorgegebenen Wert begrenzt wird.

Ein derartiger, passiver Halbleiterstrombegrenzer ist in der deutschen Patentanmeldung 197 17 614 offenbart.

Die erfindungsgemäße Strombegrenzungsschaltung läßt sich mit besonderen Vorteilen bei ungesteuerten Gleichrichtern verwenden, da sie sofort bei dem ersten Einschalten wirksam wird und nach Abschluß des Aufladevorganges nicht mehr in Erscheinung tritt. Andererseits kann der Gleichrichter auch als gesteuerte Brückenschaltung aufgebaut sein, um gegebenenfalls bei der Stillsetzung eines Verbrauchers zurückfließende Energie in das Netz zurückspeisen zu können.

Besondere Vorzüge ergeben sich weiterhin, wenn durch den ausgangsseitg des Stromrichters angeschlossenen Kondensator ein Spannungszwischenkreis gebildet wird, an den ein Netzteil, insbesondere ein Schaltnetzteil, zur Energieversorgung oder ein Stromrichter, inbesondere Wechselrichter, zur Erzeugung einer variablen Spannung für die Versorgung eines Elektromotors, angeschlossen ist. Da das erfindungsgenmäße Strombegrenzungselement in den Stomkreis des Gleichrichters eingeschalten ist, können an dem Glättungskondensator ohne weiteres schaltende Verbraucher mit sprungartigen Stromänderungen betrieben werden. Die hieraus folgenden, stetigen Änderungen der Kondensatorspannung ziehen während des Betriebes Ladeströme nach sich, welche zwar oberwellenbehaftet sind, jedoch in den seltensten Fällen eine Amplitude erreichen, welche die Begrenzungsfunktion des erfindungsgemäßen Strombegrenzungselements aktiviert. Dennoch ist dieses jederzeit zum sofortigen Ansprechen bereit und sichert dadurch auch bei impulsartigen Lastströmen durch den angeschlossenen Verbraucher eine optimale Lebensdauer des betreffenden Stromrichters.

Weiterhin liegt es im Rahmen der Erfindung, daß dem nichtlinearen Strombegrenzungselement ein Filter, inbesondere ein aktives Oberwellenfilter, nachgeschalten ist. Hierdurch kann zusätzlich eine Glättung des Ladestroms erreicht werden, so daß die Netzrückwirkungen durch den Stromrichter auf ein Minimum reduziert sind.

Insbesondere bei der Verwendung eines zum Zweck der Energierückspeisung in das Netz gesteuerten Gleichrichters besteht die Gefahr, daß bei einem Zusammenbrechen der Netzspannung sich der Zwischenkreiskondensator schlagartig über den Gleichrichter entlädt. Solchenfalls ist das erfindungsgemäße Strombegrenzungselement jedoch nicht wirksam. Denn auch bei dieser, nun entgegengesetzten Stromrichtung kann sich innerhalb des Halbleiter-Chips ein Strompfad ausbilden. Nun führt der Spannungsabfall an dem integrierten Widerstandselement mit ansteigendem Strom zu einer Reduzierung der Sperrspannung an den in der Umgebung des Kanals angeordneten pn-Übergängen, deren Ausdehnung sich dadurch verringert. Somit wird nun der Kanalwiderstand reduziert und der Strom kann in kürzester Zeit sehr hohe Werte annehmen, welche an dem integrierten Widerstand infolge des Spannungsabfalls ein erhebliches Maß an thermischer Energie freisetzen, welche das Strombegrenzungselement in kürzester Zeit zerstören könnte. Um diesem Betriebsfall vorzubeugen, sieht die Erfindung daher eine antiparallel zu dem strombegrenzenden Element geschaltete Diode vor, welche bei einem Netzspannungsausfall eine Entladung des Zwischenkreiskondensators ohne Beschädigung des unwirkamen, strombegrenzenden Elements erlaubt.

Schließlich entspricht es der Lehre der Erfindung, daß die antiparallel zu dem strombegrenzenden Element geschaltete Diode eine Schokttky-Diode ist. Derartige Dioden haben kürzeste Schaltzeiten und außerdem einen Durchlaßspannungsabfall von etwa 0,3 V, so daß sie schädliche, zum Netz abfließende Ströme ohne Gefahr um das strombegrenzende Element herumleiten können.

Weitere Merkmale, Einzelheiten und Vorteile auf der Basis der Erfindung ergeben sich aus der nachfolgenden Beschreibung einiger bevorzugter Ausführungsbeispiele der Erfindung. Hierbei zeigt:
- Fig. 1: die erfindungsgemäße Vorladeschaltung in einem Umrichter mit einem 2-phasigen Gleichrichter und einem 3-phasigen Wechselrichter;
- Fig. 2: eine der Fig. 1 ähnliche Schaltungsanordnung mit einem zusätzlichen, aktiven Oberwellenfilter; sowie
- Fig. 3: das erfindungsgemäße Schaltungskonzept bei parallelem Anschluß mehrerer Wechselrichter über jeweils einen zugeordneten Zwischenkreiskondensator an eine gemeinsame Gleichspannungsquelle.

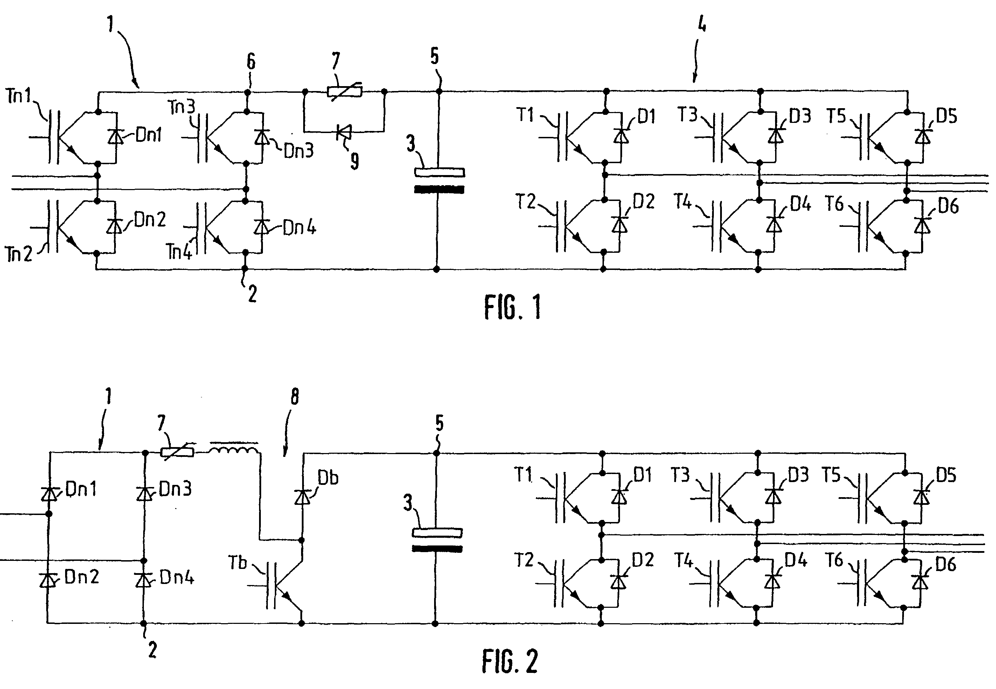

In Fig. 1 ist ein aus vier Dioden Dn1 - Dn4 aufgebauter Vollweggleichrichter 1 zu erkennen, der wechselstromseitig an einem 220 V-Netz angeschlossen ist. Mit dem Minuspol 2 des Vollweggleichrichters 1 ist ein Anschluß eines Glättungskondensators 3 verbunden, der eine geglättete Zwischengleichspannung zur Verfügung stellt, die von einem aus gesteuerte n Transistoren T1 - T6 und jeweils parallel geschalteten Freilaufdioden D1 - D6 aufgebauten Wechselrichter 4 in Drehstrombrückenschaltung in eine 3-phasige Ausgangsspannung zum Anschluß eines Verbrauchers umgesetzt wird.

Da der Kondensator 3 zum Zweck einer guten Glättung eine relativ große Kapazität aufweist, würde bei der direkten Verbindung von dessen positiver Elektrode 5 mit dem Pluspol 6 des Vollweggleichrichters 1 keine ausreichende Begrenzung des Ladestroms erreicht werden. Die Erfindung ordnet zu diesem Zweck zwischen dem positiven Ausgangsanschluß 6 des Gleichrichters 1 und der positiven Elektrode 5 des Glättungskondensators 3 ein zweipoliges Strombegrenzungselement 7 an. Aufgrund einer nichtlinearen Kennlinie des Strombegrenzungselements 7 nimmt dieses erst bei Überschreiten eines vorgegebenen Ladestromwertes einen entsprechenden Teil der Ausgangsspannung des Gleichrichters 1 auf und begrenzt dadurch den durch den Kondensator 3 fließenden Ladestrom. Gleichzeitig wird dieser Strompfad bedämpft, so daß kein Überschwingen der Ausgangsspannung an dem Gleichrichter 1 verursacht wird. Zu diesem Zweck ist das Strombegrenzungselement 7 als Halbleiterstrombegrenzer aufgebaut. Die interne Funktionsweise folgt etwa dem Prinzip einer Feldeffekt-Konstantstromquelle mit in dem Halbleiterchip integriertem Sourcewiderstand. Infolge eines durch erhöhte Ströme ausgelösten Spannungsabfalls an diesem Sourcewiderstand werden dem Strompfad begrenzende p-n-Übergänge stärker in Sperrrichung vorgespannt. Durch die hieraus folgende Verbreiterung dieser p-n-Übergänge wird der verbleibende Strompfad eingeengt und dadurch dessen Widerstand erhöht, so daß der Spannungsabfall bei Überschreiten eines Stromgrenzwertes überproportional zunimmt, während der Stromgrenzwert näherungsweise eingehalten wird. Das Strombegrenzungselement 7 ist aus SiC-Halbleiterwerkstoff und kann daher kurzzeitige Energiespitzen aufnehmen und über sein Gehäuse nach außen abgeben.

Damit beim Abschalten eines Verbrauchers auf den Zwischenkreiskondensator 3 zurückfließende Energie in das Netz zurückgespeist werden kann, sind den Gleichrichterdioden Dn1 - Dn4 Leistungstransistoren Tn1 - Tn4 jeweils antiparallel geschaltet. Während einer derartigen Rückspeisungsphase kehrt sich der Stromfluß in dem Zwischenkreis um. Bei dieser Stromrichtung kann das Strombegrenzungselement 7 seine Funktion nicht erfüllen, so daß bei netzseitigen Kurzschlüssen relativ große Stromspitzen auftreten könnten, welche zu einer Zerstörung des Strombegrenzungselements 7 führen könnten. Um hier auch in diesem Fall eine Beschädigung des Strombegerenzungselements 7 sicher ausschließen zu können, ist diesem eine Schottky-Diode 9 antiparallel geschaltet. Die Schottky-Diode 9 ist aufgrund ihrer niedrigen Durchlaßspannung von etwa 0,3 V in der Lage, den gesamten Rückspeisungsstrom um das Strombegrenzungselement 7 herumzuleiten.

Bei der Anordnung nach Fig. 2 ist zwischen dem Strombegrenzungselement 7 und der positiven Elektrode 5 des Elektrolyt-Kondensators 3 ein aktives Oberwellenfilter 8 eingeschalten, welches Oberwellen in dem Ladestrom des Kondensators 3 glättet und zu dem negativen Ausgangsanschluß 2 des Vollweggleichrichters 1 abzuleiten vermag.

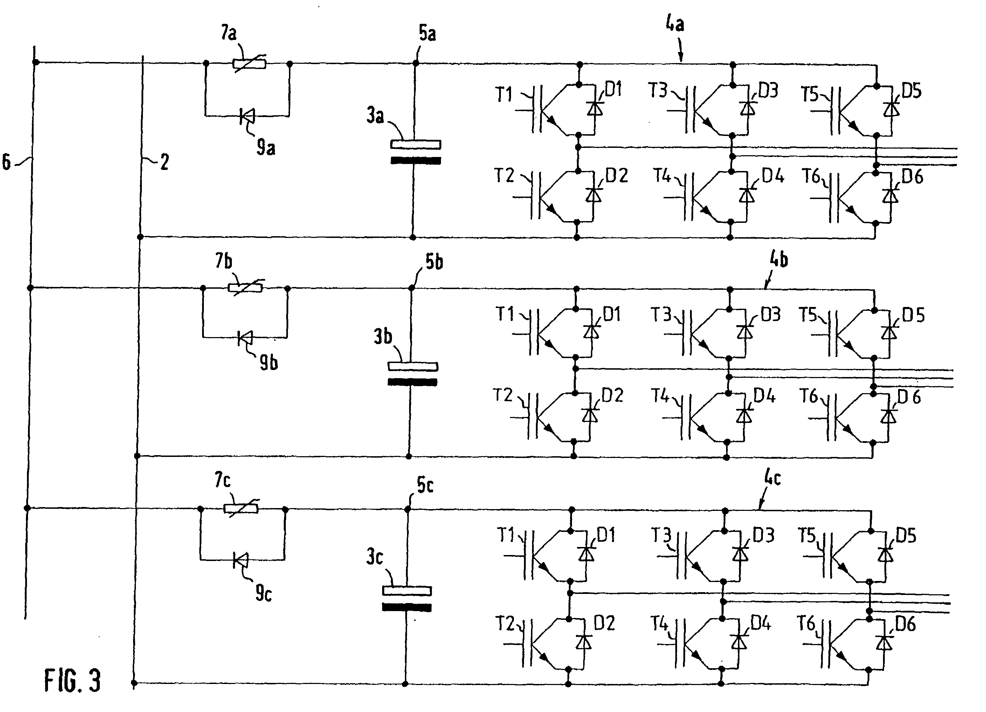

Schließlich zeigt Fig. 3 eine Schaltungsanordnung, wobei die Gleichspannungsausgänge 6, 2 eines nicht dargestellten Gleichrichters über je einen Glättungskondensator 3a - 3c mit mehreren, parallel geschalteten Wechselrichtern 4a - 4c gekoppelt sind, welche wiederum zur individuellen Ansteuerung angeschlossener Verbraucher dienen. Bei einer derartigen Schaltkreisstruktur ist zwischen dem positiven Ausgangsanschluß 6 des gemeinsamen Gleichrichters und den jeweils positiven Elektrodenanschlüssen 5a - 5c sämtlicher Kondensatoren 3a - 3c je ein erfindungsgemäßes Strombegrenzungselement 7a - 7c eingeschalten, damit die Ladeströme sämtlicher Kondensatoren unabhängig voneinander begrenzt werden können und im Fall des ausgangsseitigen Kurzschlusses eines Wechselrichters 4a - 4c durch sofortiges Ansprechen des zugeordneten Strombegrenzungselements 7a - 7c der Gleichrichter vor einer Überlastung geschützt werden kann. Hierdurch wird der betreffende Zwischenkreis von der gemeinsamen Gleichspannungsquelle 6, 2 weitgehend abgetrennt, so daß die übrigen Zwischenkreise keinen übermäßigen Spannungseinbruch erleiden und die übrigen Verbraucher weiter betrieben werden können. Schottky-Dioden 9a - 9c verhindern eine Beschädigung der Strombegrenzungselemente 7a - 7c bei einem Kurzschluß in dem Gleichspannungskreis 6, 2.

## Patentansprüche

1. Schaltungsanordnung zum Vorladen des ausgangsseitig an einen netzgeführten Stromrichter (1) angekoppelten Kondensators (3), wobei zwischen einem Gleichspannungsausgang (6) des Stromrichters (1) und dem betreffenden Anschluß (5) des Kondensators (3) ein dessen Ladestrom begrenzendes Element (7) eingeschalten ist, **dadurch gekennzeichnet, daß** das Strombegrenzungselement (7) als passiver Halbleiterstrombegrenzer ausgeführt ist mit einer nichtlinearen Strom-Spannungs-Kennlinie, so daß der Ladestrom auf einen von der Ladespannung weitgehend unabhängigen Wert begrenzt wird, wobei die Wirkungsweise des Halbleiterstrombegrenzers (7) etwa einer Feldeffekt-Konstantstromquelle entspricht.

2. Schaltungsanordnung nach Anspruch 1, **dadurch gekennzeichnet, daß** das Strombegrenzungselement (7) derart dimensioniert ist, daß der Grenzwert oberhalb des typischen Ladestroms liegt.

3. Schaltungsanordnung nach Anspruch 1 oder 2, **dadurch gekennzeichnet, daß** das Strombegrenzungselement (7) eine Ansprechzeit von weniger als 1 ms aufweist.

4. Schaltungsanordnung nach einem der vorhergehenden Ansprüche, **dadurch gekennzeichnet, daß** das Halbleitermaterial des Halbleiterstrombegrenzers (7) aus SiC besteht.

5. Schaltungsanordnung nach einem der vorhergehenden Ansprüche, **dadurch gekennzeichnet, daß** der Stromrichter (1) als ungesteuerter Gleichrichter aufgebaut ist.

6. Schaltungsanordnung nach Anspruch 5, **dadurch gekennzeichnet, daß** zur Rückspeisung von Energie in das Netz dem ungesteuerten Gleichrichter ein gesteuerter Wechselrichter antiparallel geschalten ist.

7. Schaltungsanordnung nach einem der vorhergehenden Ansprüche, **dadurch gekennzeichnet, daß** durch den ausgangsseitig des Stromrichters (1) angeschlossenen Kondensator (3) ein Spannungszwischenkreis gebildet wird, an den ein Netzteil, insbesondere Schaltnetzteil, zur Energieversorgung oder ein Stromrichter, inbesondere Wechselrichter (4), zur Erzeugung einer variablen Spannung für die Versorgung eines Elektromotors, angeschlossen ist.

8. Schaltungsanordnung nach einem der vorhergehenden Ansprüche, **dadurch gekennzeichnet, daß** dem Strombegrenzungselement (7) ein Filter, insbesondere ein aktives Oberwellenfilter (8), nachgeschalten ist.

9. Schaltungsanordnung nach einem der vorhergehenden Ansprüche, **dadurch gekennzeichnet, daß** zu dem strombegrenzenden Element (7) eine Diode (9) antiparallel geschaltet ist.

10. Schaltungsanordnung nach Anspruch 9, **dadurch gekennzeichnet, daß** die Diode (9) eine Schottky-Diode ist.

11. Schaltungsanordnung nach Anspruch 9 oder 10, **dadurch gekennzeichnet, daß** das Halbleitermaterial der Diode (9) aus SiC besteht.

## Claims

1. Circuit arrangement for precharging the output side of a capacitor (3) connected to a line-commutated static converter (1), whereby a current-limiting element (7) is connected between a d.c. output (6) of the static converter (1) and the relevant terminal (5) of the capacitor (3), **characterised in that** the current-limiting element (7) is designed as a passive semiconductor current limiter with a non-linear current-voltage characteristic so that the charging current is limited to a value which is largely independent of the charging voltage, whereby the functioning of the semiconductor current-limiter (7) corresponds approximately to that of a field-effect, constant-current source.

2. Circuit arrangement in accordance with Claim 1, **characterised in that** the current-limiting element (7) is dimensioned so that the limit value is above the typical charging current.

3. Circuit arrangement in accordance with Claim 1 or 2, **characterised in that** the current-limiting element (7) has a response time of less than 1 ms.

4. Circuit arrangement in accordance with one of the preceding claims, **characterised in that** the semiconductor material of the semiconductor current-limiter (7) is SiC.

5. Circuit arrangement in accordance with one of the preceding claims, **characterised in that** the static converter (1) is designed as an uncontrolled rectifier.

6. Circuit arrangement in accordance with Claim 5, **characterised in that** a controlled inverter is connected anti-parallel to the uncontrolled rectifier for energy recovery to the power supply system.

7. Circuit arrangement in accordance with one of the preceding claims, **characterised in that** a voltage intermediate circuit is formed by the capacitor (3) connected to the output end of the static converter (1), to which circuit is connected a power supply assembly, particularly a mains power supply, is connected for the provision of energy, or a static converter, particularly an inverter (4), for generation of a variable voltage for supply of an electric motor.

8. Circuit arrangement in accordance with one of the preceding claims, **characterised in that** the current-limiting element (7) is fitted after a filter, particularly an active harmonic filter (8).

9. Circuit arrangement in accordance with one of the preceding claims, **characterised in that** a diode (9) is connected anti-parallel to the current-limiting element (7).

10. Circuit arrangement in accordance with Claim 9, **characterised in that** the diode (9) is a Schottky barrier diode.

11. Circuit arrangement in accordance with Claim 9 or 10, **characterised in that** the semiconductor material of the diode (9) is SiC.

## Revendications

1. Circuit de précharge d'un condensateur (3) raccordé du côté sortie à un convertisseur (1) commuté par le réseau, avec montage entre une sortie (6) de tension continue du convertisseur (1) et la borne (5) concernée du condensateur (3) d'un élément (7) en limitant le courant de charge, **caractérisé en ce que** l'élément (7) limitant le courant est réalisé sous la forme d'un limiteur de courant passif à semi-conducteur ayant une courbe caractéristique courant-tension non linéaire, de sorte que le courant de charge est limité à une valeur dans une grande mesure indépendante de la tension de charge, le mode d'action du limiteur (7) de courant à semi-conducteur correspondant à peu près à une source de courant constante à effet de champ.

2. Circuit suivant la revendication 1, **caractérisé en ce que** l'élément (7) de limitation du courant a des dimensions telles que la valeur limite est supérieure au courant de charge typique.

3. Circuit suivant la revendication 1 ou 2, **caractérisé en ce que** l'élément (7) de limitation du courant a un temps de réponse inférieur à 1 ms.

4. Circuit suivant l'une des revendications précédentes, **caractérisé en ce que** le matériau semi-conducteur du limiteur (7) de courant à semi-conducteur est en SiC.

5. Circuit suivant l'une des revendications précédentes, **caractérisé en ce que** le convertisseur (1) est constitué en redresseur non commandé.

6. Circuit suivant la revendication 5, **caractérisé en ce que**, pour alimenter en retour le réseau en énergie, un onduleur commandé est monté tête bêche au redresseur non commandé.

7. Circuit suivant l'une des revendications précédentes, **caractérisé en ce qu'**il est formé par le condenseur (3) raccordé du côté de la sortie du convertisseur (1) un circuit intermédiaire de tension auquel est raccordé un bloc d'alimentation, notamment un bloc d'alimentation à découpage, pour l'alimentation en énergie ou un convertisseur, notamment un onduleur (4) destiné à la production d'une tension variable pour l'alimentation d'un moteur électrique.

8. Circuit suivant l'une des revendications précédentes, **caractérisé en ce qu'**il est monté en aval de l'élément (7) de limitation du courant un filtre, notamment un filtre (8) actif d'harmonique.

9. Circuit suivant l'une des revendications précédentes, **caractérisé en ce qu'**une diode (9) est montée tête bêche à l'élément (7) de limitation du courant.

10. Circuit suivant la revendication 9, **caractérisé en ce que** la diode (9) est une diode de Schottky.

11. Circuit suivant la revendication 9 ou 10, **caractérisé en ce que** le matériau semi-conducteur de la diode (9) est en SiC.
